# EUROPEAN PATENT APPLICATION

(11) **EP 4 349 643 A1**
(43) Date of publication of application: **10.04.2024**
(21) Application number: 22932513.9
(22) Date of filing: 08.11.2022
(51) Int. Cl.: B60L 53/66, B60L 53/62

(54) **CHARGING PILE TYPE IDENTIFICATION METHOD AND APPARATUS, AND SERVICE PLATFORM FOR ELECTRIC VEHICLE**

(30) Priority: 09.08.2022 CN 202210949233
(71) Applicant: Eve Power Co., Ltd., Jingmen Hubei 448000 (CN)
(72) Inventor: ZHANG, Yunlong, Jingmen, Hubei 448000 (CN); LI, Haowen, Jingmen, Hubei 448000 (CN); YANG, Honglin, Jingmen, Hubei 448000 (CN); HUANG, Yiwen, Jingmen, Hubei 448000 (CN); PAN, Anjin, Jingmen, Hubei 448000 (CN); JIANG, Jibing, Jingmen, Hubei 448000 (CN)
(74) Representative: Petraz, Gilberto Luigi
(86) International application number: PCT/CN2022/130562
(87) International publication number: WO 2024/031854

(57) **Abstract**

The present application discloses a method and apparatus for charging pile type recognition, and an electric vehicle service platform. The charging pile type recognition method includes: obtaining a charging parameter of an electric vehicle within a preset time period; determining a proportion of a preset power charging capacity of a charging pile within the preset time period according to the charging parameter, wherein the proportion of the preset power charging capacity is equal to a ratio of a preset amount of electricity charged into the electric vehicle by the charging pile at a preset power within the preset time period to a total amount of electricity charged into the electric vehicle by the charging pile within the preset time period; and determining a type of the charging pile according to the proportion of the preset power charging capacity. In this application, workload, implementation difficulty and cost of the charging pile type recognition method may be reduced.

## Description

This application claims priority to Chinese Patent Application No. 202210949233.0 filed on August 9, 2022. The disclosure of the aforementioned application is incorporated herein by reference in its entirety.

### TECHNICAL FIELD

Embodiments of the present application relate to electric vehicle charging technologies, for example, to a charging pile type recognition method and apparatus, and an electric vehicle service platform.

### BACKGROUND

An electric vehicle service platform is a service platform established by a vehicle enterprise or a power battery enterprise. The service platform can establish a communication connection with a vehicle-mounted system of an electric vehicle to receive vehicle data of the electric vehicle. Thus, the service platform can provide better service for users according to the vehicle data, and analyze and process the vehicle data, thereby contributing to overall development of the industry.

However, for a charging process of the electric vehicle, there is no regular field in the vehicle data received by the electric vehicle service platform to indicate which type of charging pile is used in the charging process. A related solution is to design an additional field and an identifier to enable the electric vehicle to report a charging pile type to the service platform. However, the solution requires unified upgrade and planning of design of a communications device of the electric vehicle, which is of a large workload and is relatively difficult to implement.

### SUMMARY OF THE INVENTION

This application provides charging pile type recognition methods and apparatuses, and electric vehicle service platforms, to reduce workload, implementation difficulty, and costs of charging pile type recognition.

In a first aspect, an embodiment of the present application provides a charging pile type recognition method including: obtaining a charging parameter of an electric vehicle within a preset time period; determining a proportion of a preset power charging capacity of a charging pile within the preset time period according to the charging parameter, wherein the proportion of the preset power charging capacity is equal to a ratio of a preset amount of electricity charged into the electric vehicle by the charging pile at a preset power within the preset time period to a total amount of electricity charged into the electric vehicle by the charging pile within the preset time period; and determining a type of the charging pile according to the proportion of the preset power charging capacity.

In one or more embodiments, the obtaining of the charging parameter comprises: obtaining vehicle data of the electric vehicle; and determining the charging parameter within the preset time period according to the vehicle data, wherein the charging parameter comprises a charging voltage and a charging current of the charging pile, and the charging parameter is obtained at a plurality of preset time intervals.

In one or more embodiments, the determining of the proportion of the preset power charging capacity comprises: determining a charging power and a charging capacity for each of the preset time intervals according to the charging parameter; and calculating the proportion of the preset power charging capacity according to the charging power and the charging capacity for each of the preset time intervals.

In one or more embodiments, the calculating the proportion of the preset power charging capacity according to the charging power and the charging amount at the each preset time interval comprises: calculating, according to the charging amount at the each preset time interval, the total power amount charged to the electric vehicle in the preset time period; determining the charging amount corresponding to the preset time interval in which the charging power falls within the preset power range as a unit preset power; performing summation calculation on the unit preset power in the preset time period to obtain the preset power; and determining the proportion of the preset power charging capacity according to the ratio of the preset power to the total power.

In one or more embodiments, the preset time interval is within 30 seconds.

In one or more embodiments, the determining of the type of the charging pile comprises: determining the type of the charging pile according to a relative relationship between the proportion of the preset power charging capacity and a preset proportion threshold.

In one or more embodiments, the type of the charging pile is one of an Alternating Current charging pile and a Direct Current charging pile; the determining of the type of the charging pile according to the relative relationship comprises: in response to determining that the proportion of the preset power charging capacity is greater than or equal to the preset proportion threshold, determining the type of the charging pile as the Alternating Current charging pile; and in response to determining that the proportion of the preset power charging capacity is less than the preset proportion threshold, determining the type of the charging pile as the Direct Current charging pile.

In one or more embodiments, the preset power is less than or equal to 7kW.

In a second aspect, an embodiment of this application further provides a charging pile type recognition apparatus including: a charging parameter obtaining module, a capacity proportion determination module, and a type determination module, where the charging parameter obtaining module is configured to acquire a charging parameter of an electric vehicle in a preset time period; a capacity proportion determination module is configured to determine a proportion of a preset power charging capacity of the charging pile within the preset time period according to the charging parameter, wherein the proportion of the preset power charging capacity refers to a ratio of the preset amount of electricity charged into the electric vehicle by the charging pile at the preset power within the preset time period to a total amount of electricity charged into the electric vehicle by the charging pile within the preset time period; and a type determination module is configured to determine the type of the charging pile according to the proportion of the preset power charging capacity.

In a third aspect, an embodiment of this application further provides an electric vehicle service platform including the charging pile type recognition apparatus of the second aspect, wherein the electric vehicle service platform is communicatively connected to the electric vehicle.

Beneficial effects of the present application:
the charging pile type recognition method, apparatus and the electric vehicle service platform provided in one or more embodiments utilizes the principle that the charging power ranges provided by different types of charging piles are different. The power of the charging pile within the preset time period can be determined and the proportion of the preset power charging capacity of the charging pile within the preset time period can be calculated according to the charging parameter. The type of the charging pile can be determined according to the proportion of the preset power charging capacity. Thus, the type of the charging pile can be recognized according to operation data of the service platform. A problem of recognizing the charging pile type can be resolved. Workload, implementation difficulty, and cost of the charging pile type recognition method are reduced.

### BRIEF DESCRIPTION OF THE DRAWINGS

FIG. 1 is a schematic flowchart of a charging pile type recognition method according to one or more embodiments of the present application.
FIG. 2 is a schematic flowchart of another charging pile type recognition method according to one or more embodiments of the present application.
FIG. 3 is a schematic graph of a charging power of an Alternating Current charging pile varying with a charging time during a charging process according to one or more embodiments of the present application.
FIG. 4 is a schematic graph of a charging power of a Direct Current charging pile varying with a charging time during a charging process according to one or more embodiments of the present application.
FIG. 5 is a schematic diagram of a proportion of a preset power charging capacity versus a proportion of an other power charging capacity in a charging process by an Alternating Current charging pile according to one or more embodiments of the present application.
FIG. 6 is a schematic diagram of a proportion of a preset power charging capacity versus a proportion of an other power charging capacity in a charging process by a Direct Current charging pile according to one or more embodiments of the present application.
FIG. 7 is a schematic block diagram of a charging pile type recognition apparatus according to one or more embodiments of the present application.
FIG. 8 is a schematic diagram of an electric vehicle service platform according to one or more embodiments of the present application.

### DETAILED DESCRIPTION OF THE EMBODIMENTS

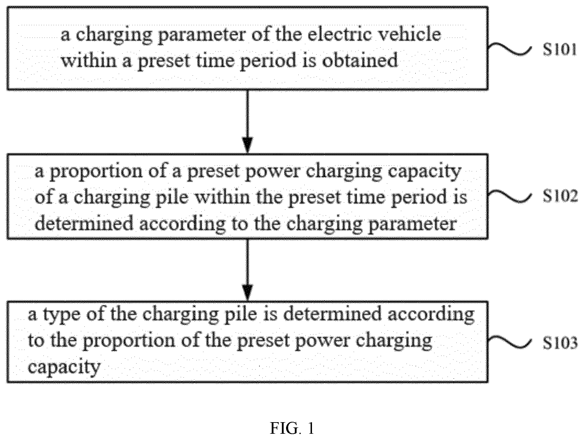

Embodiments of the present application provide a charging pile type recognition method, which is applied to an electric vehicle service platform. There is a communication connection between the service platform and an electric vehicle served thereby, and the communication connection complies with a GB/T 32960.3 standard. FIG. 1 is a schematic flowchart of the charging pile type recognition method according to one or more embodiments of the present application. As shown in FIG. 1, the charging pile type recognition method may include steps S101~S103.

In step S101, a charging parameter of the electric vehicle within a preset time period is obtained.

The preset time period is a time period of preset duration in a charging process of the electric vehicle, and duration of the preset time period is a preset value. The charging parameter is an electrical parameter in a charging process of the electric vehicle, and the charging parameter may represent an electrical quantity change in the charging process of the rechargeable battery of the electric vehicle. For example, the charging parameter may include at least one of a charging voltage, a charging current and a charging power.

For example, in a process of using the electric vehicle, a sensor or a measurement device disposed at multiple locations of the electric vehicle is able to collect a driving parameter, a power consumption parameter, and a charging parameter of the electric vehicle. A system of the electric vehicle reports the vehicle data to the service platform according to a set cycle, where each group of the vehicle data may include at least one of a driving parameter, a charging parameter or a power consumption parameter. The service platform may include a data analysis apparatus, and the data analysis apparatus performs preliminary analysis on the received vehicle data to obtain a charging parameter within the preset time period in the charging process of the electric vehicle, where the preset time period may be a time period of any preset duration in the charging process.

For example, the service platform may determine, according to the charging identifier or a value change of the charging parameter in the vehicle data, whether the corresponding electric vehicle is in the charging state. Further, when the electric vehicle is in the charging state, the service platform may determine the charging parameter of the electric vehicle within the preset time period according to the received continuous at least one group of vehicle data. For example, if the reporting cycle of the vehicle data is 1 second, and the preset time period is 5 minutes, the service platform may determine the charging parameter of the electric vehicle within 5 minutes according to the received continuous 30 groups of vehicle data.

In step S102, a proportion of a preset power charging capacity of a charging pile within the preset time period is determined according to the charging parameter.

The proportion of the preset power charging capacity is equal to a ratio of the preset amount of electricity charged into the electric vehicle by the charging pile at the preset power within the preset time period to the total amount of electricity charged into the electric vehicle by the charging pile within the preset time period.

For example, a value of the preset power may be set according to a charging power range provided by various types of charging piles. If a first charging power range provided by a type of charging pile for the electric vehicle in a normal power supply process is lower than a second charging power range provided by another type of charging pile for the electric vehicle in a normal power supply process, the value of the preset power may be set according to the first charging power range. For example, if a maximum charging power that can be provided by the Alternating Current charging pile is 7kW, a maximum charging power that can be provided by the Direct Current charging pile is 80kW, and the charging power provided by the Direct Current charging pile in the process of stable charging is greater than 7kW, the preset power may be set to be less than 7kW.

The service platform may determine the proportion of the preset power charging capacity of the charging pile within the preset time period according to the charging parameter. For example, the service platform may determine, according to the charging parameter, a duration in which the charging pile charges at the preset power within the preset time period, and further determine the proportion of the preset power charging capacity according to the duration and the preset time period. Alternatively, the service platform may respectively calculate the total amount of electricity charged and the amount of electricity charged at the preset power for the electric vehicle within the preset time period according to the charging parameter, and then calculate the proportion of the preset power charging capacity according to the total amount of electricity charged within the preset time period and the amount of electricity charged at the preset power for the electric vehicle.

In step S103, a type of the charging pile is determined according to the proportion of the preset power charging capacity.

For example, charging power ranges that can be provided by different types of charging piles are different, and thus the proportion of the preset power charging capacity is different. Therefore, a type of the charging pile that provides a charging service for the electric vehicle may be determined according to the proportion of the preset power charging capacity. For example, the types of charging pile include an Alternating Current charging pile and a Direct Current charging pile. Since the charging power of the Direct Current charging pile is much greater than the charging power of the Alternating Current charging pile, the preset power may be set based on the charging power range provided by the Alternating Current charging pile. Thus, the service platform may determine the proportion threshold according to a charging experiment data of the electric vehicle, and determine the charging pile type by comparing the proportion of the preset power charging capacity with the proportion threshold. If the proportion of the preset power charging capacity is greater than or equal to the proportion threshold, it can be determined that the corresponding charging pile is the Direct Current charging pile. If the proportion of the preset power charging capacity is less than the proportion threshold, it can be determined that the corresponding charging pile is the Alternating Current charging pile.

The method for recognizing types of charging pile provided in one or more embodiments utilizes the principle that the charging power ranges provided by different types of charging piles are different. The power of the charging pile within the preset time period can be determined and the proportion of the preset power charging capacity of the charging pile within the preset time period can be calculated according to the charging parameter. The type of the charging pile can be determined according to the proportion of the preset power charging capacity. Thus, the type of the charging pile can be recognized according to operation data of the service platform. In a related technology, the service platform establishes a communication connection to the vehicle-mounted system of the electric vehicle according to a GB/T 32960.3 standard. However, a field of a type of the charging pile used for charging the electric vehicle is not included in a basic field specified in the GB/T 32960.3 standard. Compared with the related technology in which the charging pile type is reported by the electric vehicle by designing an additional field and the identifier, in one or more embodiments, a problem of recognizing the charging pile type can be resolved with the basic field specified in GB/T 32960.3. Workload, implementation difficulty, and cost of the charging pile type recognition method are reduced.

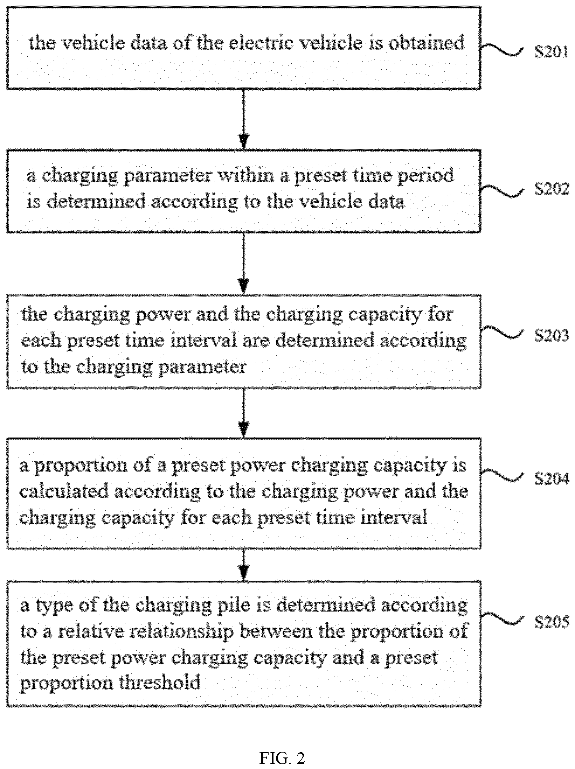

FIG. 2 is a schematic flowchart of another charging pile type recognition method according to one or more embodiments of the present application. As shown in FIG. 2, the charging pile type recognition method may include steps S201~ S205.

In step S201, the vehicle data of the electric vehicle is obtained.

The vehicle data refers to state data during the operation of the electric vehicle, and may be collected by using sensing apparatus.

For example, the communication connection is established between the service platform and the electric vehicle according to a GB/T 32960.3 standard. The service platform may obtain the vehicle data of the basic field by using the communication connection. The vehicle data may include a driving parameter, a charging parameter, and a power consumption parameter. A manner of obtaining the vehicle data of the electric vehicle may be that the service platform initiates an inquiry to the electric vehicle, or the electric vehicle actively reports the inquiry to the service platform. A period for obtaining the vehicle data may be set according to a user requirement. For example, the period for obtaining the vehicle data may be related to a type of the electric vehicle. For example, considering that a driving route of a bus is regular and a speed of the bus is stable, and a user of the bus is less dependent on a service provided by the service platform, the period for obtaining the vehicle data of the bus may be set to 30 seconds, that is, the electric vehicle reports a group of vehicle data to the service platform every 30 seconds. Considering that a driving route of a private vehicle is changeable and a speed of the private vehicle varies greatly, and a user of the private vehicle is more dependent on a service provided by the service platform, the period for obtaining the vehicle data of the private vehicle may be set to 1 second, that is, the electric vehicle reports a group of vehicle data to the service platform every 1 second.

In step S202, a charging parameter within a preset time period is determined according to the vehicle data.

The charging parameter includes the charging voltage and the charging current that are provided by the charging pile. An acquisition cycle of the charging parameter is equal to an acquisition cycle of the vehicle data acquisition cycle, and may be set to a preset time interval.

For example, the preset time period may be set to be greater than or equal to 5 minutes, so as to exclude a case in which only an end of the charging process is intercepted due to loss of the vehicle data, and to avoid interference of dropping current at the end of charging to a recognition result. The preset time interval may be set to be less than or equal to 30 seconds, that is, the electric vehicle uploads the vehicle data to the service platform at least once every 30 seconds, so as to ensure sufficient timeliness of the data. The vehicle data is reported by the electric vehicle per preset time interval. The service platform may determine, according to a plurality of groups of vehicle data, all charging parameters reported by the electric vehicle within the preset time period. For example, if the preset time interval is 30 seconds and the preset time period is 5 minutes, the service platform may determine, according to 10 groups of vehicle data continuously uploaded by the electric vehicle in a charging state, the charging voltage and the corresponding charging current of the electric vehicle within the preset time period.

In step S203, the charging power and the charging capacity for each preset time interval are determined according to the charging parameter.

For example, the charging power and the charging capacity may be calculated according to the charging voltage and the corresponding charging current data. In this calculation process, a data change of the charging parameter in the acquisition cycle may be ignored, so as to improve a collection speed and a processing speed of data. For example, the charging voltage in the acquisition cycle is made always equal to the value of the charging voltage collected at the end moment of the acquisition cycle, and correspondingly, the charging current in the acquisition cycle is made always equal to the value of the charging current collected in the moment when at the end of the acquisition cycle. The service platform may obtain the charging power value and the corresponding charging capacity value in the acquisition cycle by means of calculation by using the charging current, the charging voltage, and the preset time interval.

For example, the charging power for each preset time interval is calculated according to the charging voltage and the corresponding charging current. A formula for calculating the charging power may be dP = total_Vi * total_Ii, wherein dP is the charging power of the preset time interval, i is an interval sequence number of the preset time interval within the preset time period, total_Vi is a charging voltage data of the i th preset time interval within the preset time period, and total_Ii is a charging current data of the i th preset time interval within the preset time period. Further, the charging capacity for each preset time interval is calculated according to the charging power and the preset time interval. A formula for calculating the charging capacity may be dQ = Δt * total _Ii, wherein dQ is the charging capacity of the preset time interval, Δt is the preset time interval. Δt may be calculated according to a difference between a current time and a previous time at which vehicle data is collected, or may be directly calculated according to a pre-stored value.

In step S204, a proportion of a preset power charging capacity is calculated according to the charging power and the charging capacity for each preset time interval.

For example, a sum of the charging capacity of a plurality of preset time intervals within the preset time period may be calculated according to the charging capacity for each preset time interval within the preset time period, as the total amount of electricity charged to the electric vehicle within the preset time period. Further, the charging capacity for each of ones of the preset time intervals in which the charging power is within the preset power range is determined as a unit charging capacity. A sum of the unit charging capacities within the preset time period is calculated to obtain the first amount of electricity. A ratio of the preset amount of electricity to the total amount of electricity can be calculated as the proportion of the preset power charging capacity.

For example, when the preset time period is 5 minutes and the preset time interval is 30 seconds, the preset time period includes 10 preset time intervals. In a process of calculating the proportion of the preset power charging capacity, a sum of the charging capacities of the 10 preset time intervals may be calculated as the total amount of electricity charged to the electric vehicle within the preset time period. According to the charging power of each of the 10 preset time intervals, the charging capacity for a preset time interval in which the charging power is less than 7kW is determined as a unit charging capacity, and a sum of all the unit charging capacities within the preset time period is calculated as the first amount of electricity. A ratio of the preset amount of electricity to the total amount of electricity can be calculated as the proportion of the preset power charging capacity of the charging pile within the preset time period.

In step S205, a type of the charging pile is determined according to a relative relationship between the proportion of the preset power charging capacity and a preset proportion threshold.

The preset proportion threshold is used to be compared with the proportion of the preset power charging capacity, and may be determined according to charging experiment data of the charging pile for the electric vehicle.

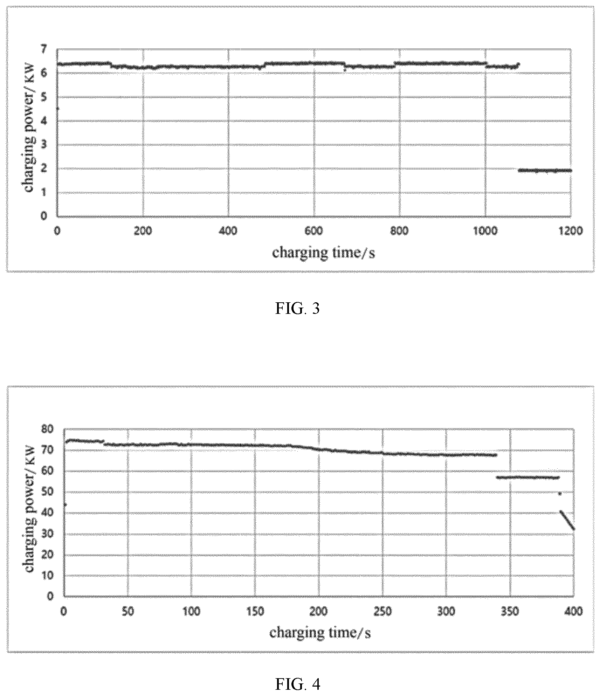

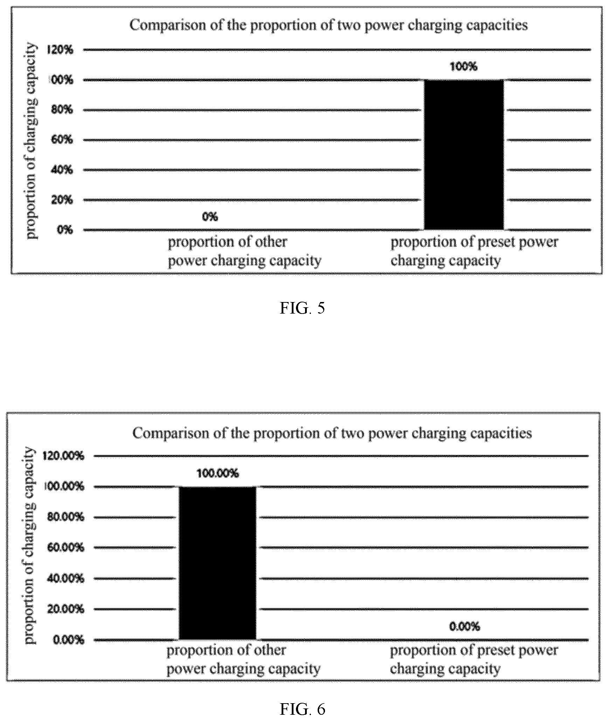

For example, in a case in which the proportion of the preset power charging capacity is greater than or equal to the preset proportion threshold, it is determined that the charging pile is an Alternating Current charging pile. In a case in which the proportion of the preset power charging capacity is less than the preset proportion threshold, it is determined that the charging pile is a Direct Current charging pile. FIG. 3 is a schematic graph of the charging power of the Alternating Current charging pile varying with the charging time during the charging process according to one or more embodiments of the present application. FIG. 4 is a schematic graph of the charging power of the Direct Current charging pile varying with a charging time during the charging process according to one or more embodiments of the present application. With reference to FIG. 3 and FIG. 4, charging power provided by the Alternating Current charging pile for the electric vehicle in the charging process is always less than 7kW, and charging power provided by the Direct Current charging pile for the electric vehicle in the charging process is always greater than 7kW. Therefore, the preset power may be set to 7kW, and the type of the charging pile can be determined according to a relative relationship between the proportion of the preset power charging capacity and the preset proportion threshold. FIG. 5 is a schematic diagram of a proportion of the preset power charging capacity versus a proportion of the other power charging capacity in a charging process by the Alternating Current charging pile according to one or more embodiments of the present application. FIG. 5 shows the proportion of the preset power charging capacity versus the proportion of other power charging capacity of the Alternating Current charging pile shown in FIG. 3. FIG. 6 is a schematic diagram of a proportion of the preset power charging capacity versus a proportion of the other power charging capacity in a charging process by the Direct Current charging pile according to one or more embodiments of the present application. FIG. 6 shows the proportion of the preset power charging capacity versus the proportion of other power charging capacity of the Direct Current charging pile shown in FIG. 4. With reference to FIG. 5 and FIG. 6, the proportion of the preset power charging capacity of the Alternating Current charging pile is 100%, which is greater than 80%. The proportion of the preset power charging capacity of the Direct Current charging pile is 0%, which is less than 80%. Therefore, a preset proportion threshold may be set to any value greater than or equal to 70% and less than 100%. For example, the preset proportion threshold may be set as 80%, so as to prevent the charging data at the end stage of the charging process from interfering with the recognition result, and improve accuracy of the charging pile type recognition method.

The charging pile type recognition method provided in one or more embodiments makes use of the principle that charging power provided by different types of charging piles is different. The power of charging piles within the preset time period is determined according to charging parameters. The proportion of the preset power charging capacity of the charging pile within the preset time period is calculated. The corresponding charging pile type is further determined according to the proportion of the preset power charging capacity of the charging pile within the preset time period. Recognition of the charging pile type is implemented according to the operation data of the service platform. A problem of recognizing the charging pile type can be resolved with the basic field specified in the GB/T 32960.3 standard. Workload, implementation difficulty, and cost of the charging pile type recognition method are reduced. The preset time interval is set to be less than or equal to 30s, which ensures a collection density of charging data during the charging process. The preset time interval is set to be at least five minutes, and the preset proportion threshold is any value greater than or equal to 70% and less than 100%, so that a data volume of the charging data can be increased. Interference to the recognition result by the end data and the fault data in the charging process can be prevented. A fault tolerance rate of the recognition method can be ensured. Accuracy and reliability of the recognition method can be improved.

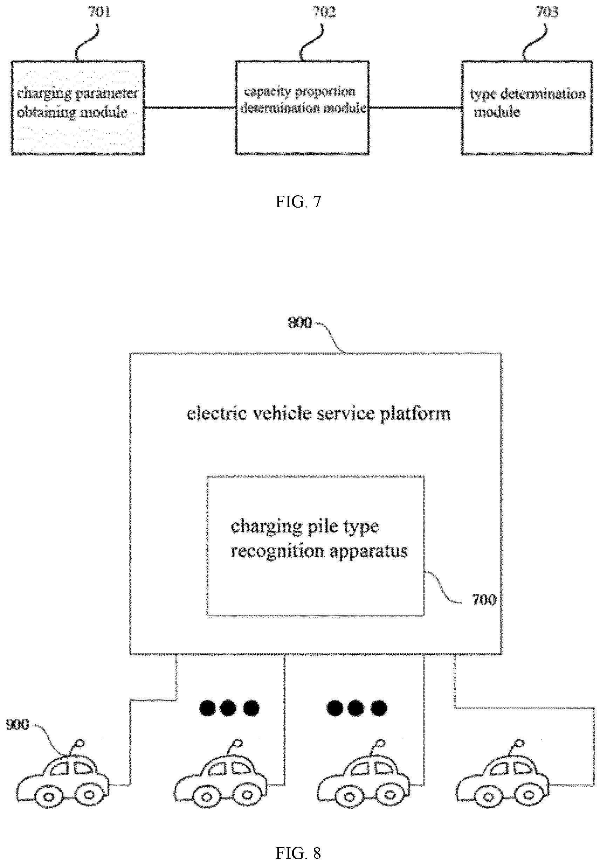

One or more embodiments of the present application provide a charging pile type recognition apparatus, and the charging pile type recognition apparatus can be disposed on an electric vehicle service platform in a form of a data processing chip or a server. FIG. 7 is a schematic block diagram of a charging pile type recognition apparatus according to one or more embodiments of the present application. Referring to FIG. 7, the charging pile type recognition apparatus 700 includes: a charging parameter obtaining module 701, a capacity proportion determination module 702, and a type determination module 703. The charging parameter obtaining module 701 is configured to acquire the charging parameter of the electric vehicle within the preset time period. The capacity proportion determination module 702 is configured to determine the proportion of the preset power charging capacity of the charging pile within the preset time period according to the charging parameter, wherein the proportion of the preset power charging capacity refers to a ratio of the preset amount of electricity charged into the electric vehicle by the charging pile at the preset power within the preset time period to a total amount of electricity charged into the electric vehicle by the charging pile within the preset time period. The type determining module 703 is configured to determine the type of the charging pile according to the proportion of the preset power charging capacity, wherein the type includes Alternating Current and Direct Current.

For example, the charging parameter obtaining module 701 includes a vehicle data obtaining unit and a charging parameter determining unit, and the vehicle data obtaining unit is configured to acquire the vehicle data of the electric vehicle. The charging parameter determining unit is configured to determine the charging parameter within the preset time period according to the vehicle data, wherein the charging parameter includes a charging voltage and a charging current that are provided by the charging pile; and an acquisition period of the charging parameter is a preset time interval.

The capacity proportion determining module 702 includes a preliminary processing unit and a calculation unit, and the preliminary processing unit is configured to determine the charging power and the charging capacity at each preset time interval according to the charging parameter. The calculation unit is configured to calculate the proportion of the preset power charging capacity according to the charging power and the charging capacity at each preset time interval. The calculation unit further includes a total amount of electricity calculation component, a unit charging capacity calculation component, a preset amount of electricity calculation component, and a proportion calculation component, wherein the total amount of electricity calculation component is configured to calculate, according to the charging capacity at the each preset time interval, the total amount of electricity charged into the electric vehicle by the charging pile within the preset time period; and the unit charging capacity calculation component is configured to determine the charging capacity corresponding to the preset time interval in which the charging power falls within the preset power range as a unit charging capacity; and the preset power calculation component is configured to calculate a sum of all the unit charging capacities within the preset time period, that is, the first amount of electricity; and the proportion calculation component is configured to determine the proportion of the preset power charging capacity according to the ratio of the preset amount of electricity to the total amount of electricity.

The type determination module 703 includes a type determination unit, and the type determining unit is configured to determine the type of the charging pile according to a relative relationship between the proportion of the preset power charging capacity and a preset proportion threshold. The type determination unit includes a first type determination component and a second type determination component. The first type determination component is configured to determine that the charging pile is an Alternating Current charging pile under a condition the proportion of the preset power charging capacity is greater than or equal to the preset proportion threshold. The second type determination component is configured to determine that the charging pile is a Direct Current charging pile under a condition the proportion of the preset power charging capacity is less than the preset proportion threshold.

One or more embodiments of the present application further provide an electric vehicle service platform. FIG. 8 is a schematic diagram of the electric vehicle service platform according to one or more embodiments of the present application. Referring to FIG. 8, the electric vehicle service platform 800 includes a charging pile type recognition apparatus 700, the electric vehicle service platform 800 is communicatively connected to an electric vehicle 900 served by the electric vehicle service platform 800, and the communication connection complies with a GB/T 32960.3 standard. The charging pile type recognition apparatus in the electric vehicle service platform may perform the charging pile type recognition method provided in one or more embodiments of the present application.

The charging pile type recognition method, apparatus and electric vehicle service platform provided in the present application make use of the principle that charging power provided by different types of charging piles is different. It determines the preset power of charging piles within the preset time period according to charging parameters. It calculates the proportion of the preset power charging capacity of the charging pile within the preset time period. It further determines the corresponding charging pile type according to the proportion of the preset power charging capacity of the charging pile within the preset time period. Therefore, the charging pile type is recognized according to the operation data of the service platform. A problem of recognizing the charging pile type can be resolved with the basic field specified in the GB/T 32960.3 standard. Workload, implementation difficulty, and cost of the charging pile type recognition method are reduced.

One or more embodiments of the present application further provide a computer readable storage medium, which stores a computer program thereon, and when the computer program is executed by a processor, the method provided in any embodiment of the present application is implemented. The computer readable storage medium may be non-volatile or volatile.

The computer storage medium in one or more embodiments of the present application may be any combination of at least one computer readable medium. The computer readable medium may be a computer readable signal medium or a computer readable storage medium. The computer readable storage medium may be, for example, but is not limited to, an electrical, magnetic, optical, electromagnetic, infrared, or semiconductor system, apparatus, or device, or any combination thereof. The computer readable storage medium includes (non-exhaustive list): an electrical connection having at least one conductor, a portable computer disk, a hard disk, a random access memory (RAM), a read-only memory (ROM), an erasable programmable read-only memory (EPROM), a flash memory, an optical fiber, a portable compact disk read-only memory (CD-ROM), an optical storage device, a magnetic storage device, or any suitable combination of the foregoing. In the present application, the computer readable storage medium may be any tangible medium that includes or stores a program, and the program may be used by or in combination with an instruction execution system, an apparatus, or a device.

The computer-readable signal medium may include a data signal propagated in the baseband or as a part of a carrier, and the data signal carries computer-readable program code. The propagated data signal may be in multiple forms, including but not limited to an electromagnetic signal, an optical signal, or any suitable combination of the foregoing. The computer-readable signal medium may also be any computer-readable medium other than a computer-readable storage medium, and the computer-readable medium may send, propagate, or transmit a program used by the instruction execution system, apparatus, or device or used in combination with the same.

The program code included in the computer readable medium may be transmitted by using any appropriate medium, including but not limited to radio, a wire, an optical cable, a radio frequency (RF), and the like, or any appropriate combination of the foregoing.

The computer program code used to perform the operation of the present application may be written in at least one programming language or a combination of multiple programming languages. The programming language includes an object-oriented programming language such as Java, Smalltalk, C++, Ruby, or Go, and further includes a conventional program programming language such as "C" language or a similar programming language. Program code may be executed entirely on the user computer, partially on the user computer, as a separate package, partially on the user computer, partially on a remote computer, or entirely on a remote computer or server. In a case involving a remote computer, the remote computer may be connected to a user computer by using any kind of network (including a local area network (LAN) or a wide area network (WAN)), or may be connected to an external computer (for example, connected by using an Internet service provider through the Internet).

A person skilled in the art should understand that the term user terminal covers any suitable type of wireless user equipment, such as a mobile phone, a portable data processing apparatus, a portable web browser, or an in-vehicle mobile station.

Generally, various embodiments of the present application may be implemented in hardware or a dedicated circuit, software, logic, or any combination thereof. For example, some aspects may be implemented in hardware, and other aspects may be implemented in firmware or software that may be executed by a controller, a microprocessor, or another computing apparatus, although the present application is not limited thereto.

Embodiments of the present application may be implemented by a data processor of a mobile apparatus by executing a computer program instruction, for example, in a processor entity, hardware, or a combination of software and hardware. The computer program instruction may be an assembly instruction, an instruction set architecture (ISA) instruction, a machine instruction, a machine-related instruction, microcode, a firmware instruction, state setting data, or source code or object code written in any combination of at least one programming language.

A block diagram of any logic procedure in the accompanying drawings of the present application may represent a program step, or may represent a logic circuit, a module, and a function that are connected to each other, or may represent a combination of the program step and the logic circuit, the module, and the function. Computer programs can be stored in memory. The memory may have any type suitable for a local technical environment, and may be implemented by using any suitable data storage technology, for example, but not limited to, a ROM, a RAM, an optical memory apparatus, and a system (a digital versatile disc (DVD) or a compact disk (CD)). Computer-readable media may include non-transitory storage media. The data processor may be any type suitable for a local technology environment, for example, but is not limited to a general-purpose computer, a dedicated computer, a microprocessor, a digital signal processor (DSP), an application-specific integrated circuit (ASIC), a field - programmable gate array (FPGA), and a processor based on a multi-core processor architecture.

## Claims

1. A charging pile type recognition method, **characterized by** comprising:
obtaining a charging parameter of an electric vehicle within a preset time period;
determining a proportion of a preset power charging capacity of a charging pile within the preset time period according to the charging parameter, wherein the proportion of the preset power charging capacity is equal to a ratio of a preset amount of electricity charged into the electric vehicle by the charging pile at a preset power within the preset time period to a total amount of electricity charged into the electric vehicle by the charging pile within the preset time period; and
determining a type of the charging pile according to the proportion of the preset power charging capacity.

2. The charging pile type recognition method according to claim 1, **characterized in that** the obtaining of the charging parameter comprises:
obtaining vehicle data of the electric vehicle; and
determining the charging parameter within the preset time period according to the vehicle data, wherein the charging parameter comprises a charging voltage and a charging current of the charging pile, and the charging parameter is obtained at a plurality of preset time intervals.

3. The charging pile type recognition method according to claim 2, **characterized in that** the determining of the proportion of the preset power charging capacity comprises:
determining a charging power and a charging capacity for each of the preset time intervals according to the charging parameter; and
calculating the proportion of the preset power charging capacity according to the charging power and the charging capacity for each of the preset time intervals.

4. The charging pile type recognition method according to claim 3, **characterized in that** the calculating of the proportion of the preset power charging capacity comprises:
calculating, according to the charging capacity for each of the preset time intervals, the total amount of electricity;
determining the charging capacity corresponding to the preset time intervals in which the charging power falls within the preset power range as a unit preset power;
performing summation calculation on the unit preset power amount in the preset time period to obtain the preset power; and
determining the proportion of the preset power charging capacity according to the ratio of the preset amount of electricity to the total amount of electricity.

5. The charging pile type recognition method according to claim 2, **characterized in that** each of the preset time intervals is less than or equal to 30 seconds.

6. The charging pile type recognition method according to claim 1, **characterized in that** the determining of the type of the charging pile comprises:
determining the type of the charging pile according to a relative relationship between the proportion of the preset power charging capacity and a preset proportion threshold.

7. The charging pile type recognition method according to claim 6, **characterized in that** the type of the charging pile is one of an Alternating Current charging pile and a Direct Current charging pile; and
the determining of the type of the charging pile according to the relative relationship comprises:
under a condition the proportion of the preset power charging capacity is greater than or equal to the preset proportion threshold, determining the type of the charging pile as the Alternating Current charging pile; and
under a condition the proportion of the preset power charging capacity is less than the preset proportion threshold, determining the type of the charging pile as the Direct Current charging pile.

8. The charging pile type recognition method according to any one of claims 1 to 7, **characterized in that** the preset power is less than or equal to 7kW.

9. A charging pile type recognition apparatus, **characterized by** comprising:
a charging parameter obtaining module, configured to obtain a charging parameter of an electric vehicle in a preset time period;
a capacity proportion determination module, configured to determine a proportion of a preset power charging capacity of a charging pile within the preset time period according to the charging parameter, wherein the proportion of the preset power charging capacity is equal to a ratio of a preset amount of electricity charged into the electric vehicle by the charging pile at a preset power within the preset time period to a total amount of electricity charged into the electric vehicle by the charging pile within the preset time period; and
a type determination module, configured to determine a type of the charging pile according to the proportion of the preset power charging capacity.

10. An electric vehicle service platform, **characterized by** comprising the charging pile type recognition apparatus according to claim 9, wherein the electric vehicle service platform is communicatively connected to the electric vehicle.
